# EUROPEAN PATENT APPLICATION

(11) **EP 0 533 025 A1**
(43) Date of publication of application: **24.03.1993**
(21) Application number: 92115315.1
(22) Date of filing: 08.09.1992
(51) Int. Cl.: H01L 41/09, G03B 17/00

(54) **Ultrasonic piezoelectric photographic film drive system**

(30) Priority: 16.09.1991 US 760434
(71) Applicant: EASTMAN KODAK COMPANY, Rochester, New York 14650-2201 (US)
(72) Inventor: Vaynshteyn Mikhail, c/o Eastman Kodak Company, Rochester, New York 14650-2201 (US)
(74) Representative: Blickle, K. Werner, Dipl.-Ing.

(57) **Abstract**

An ultrasonic photographic film driving system for a camera, or the like, comprises a traveling wave generating means for moving film in a forward or a reverse direction. The traveling wave generating means includes a traveling wave surface for contacting with a photographic film. An engaging means engages the photographic film with the traveling wave surface. A control means controls the traveling waves for moving the film in a film advance (forward) direction or in a film rewind (reverse) direction a predetermined amount. In one embodiment, the ultrasonic film driving system includes a means, coupleable to a film cartridge containing the film, for assisting movement of the film when the film is moved in the reverse direction back into the cartridge.

## Description

The present invention relates to photographic cameras and more particularly to a photographic film driving system in such a camera.

Traditional motorized film driving systems for advancing and rewinding film in cameras generally employ a DC motor, numerous gears, and gear trains. These traditional film driving systems suffer from complexity and cost. The complexity of such systems creates reduced reliability. The traditional motorized film driving systems also produce a significant amount of winding noise when activated. This is a disadvantage, since the noise produced can be annoying and disruptive of an otherwise peaceful and serene subject environment. Lastly, traditional motorized film driving systems consume a significant amount of space inside a camera, making the camera large and bulky.

It would thus be desirable to provide a motorized film driving system for a camera that overcomes the above-mentioned disadvantages and problems. Such a motorized film driving system should be simple, contain relatively few components, and have increased reliability. In addition, the motorized film driving system should produce minimal noise.

An object of the present invention is to eliminate the need for DC motors, gears, and associated gear trains in a motorized film driving system.

Another object of the invention is to provide a reliable and precise motorized film driving system.

Still another object of the invention is to provide a film driving system that produces minimal operational noise.

According to the invention, an ultrasonic photographic film driving system for a camera, or the like, comprises a traveling wave generating means for moving film in a forward or a reverse direction. The traveling wave generating means includes a traveling wave surface for contacting with a photographic film. An engaging means engages the photographic film with the traveling wave surface. A control means controls the traveling waves for moving the film in a film advance (forward) direction or in a film rewind (reverse) direction a predetermined amount. In one embodiment, the ultrasonic film driving system includes a means, coupleable to a film cartridge containing the film, for assisting movement of the film when the film is moved in the reverse direction back into the cartridge.

While the specification concludes with claims defining the features of the invention that are regarded as novel, it is believed that the invention, together with further objects thereof, will be better understood from a consideration of the following description in conjunction with the drawing figures, in which like reference numerals are carried forward, and in which:
FIG. 1 is a schematic view of a camera in which the present invention may be placed;
FIG. 2 is a schematic of a preferred embodiment of the photographic film driving system of the present invention;
FIG. 3 is a schematic view of a portion of film being held stationary between the traveling wave generating means and the biasing means;
FIG. 4 is a schematic view of a portion of film being moved in a film advance direction by traveling waves generated by the traveling wave generating means;
FIG. 5 is a schematic view of a portion of film being moved in a film rewind direction by traveling waves generated by the traveling wave generating means; and FIG. 6 is a schematic view of an alternate embodiment of the invention.

The invention is disclosed as being embodied preferably in a camera. Because cameras are well known the present description will be directed in particular to elements forming part of, or cooperating directly with, apparatus in accordance with the present invention. Elements not specifically shown or described herein may be selected from those known in the art.

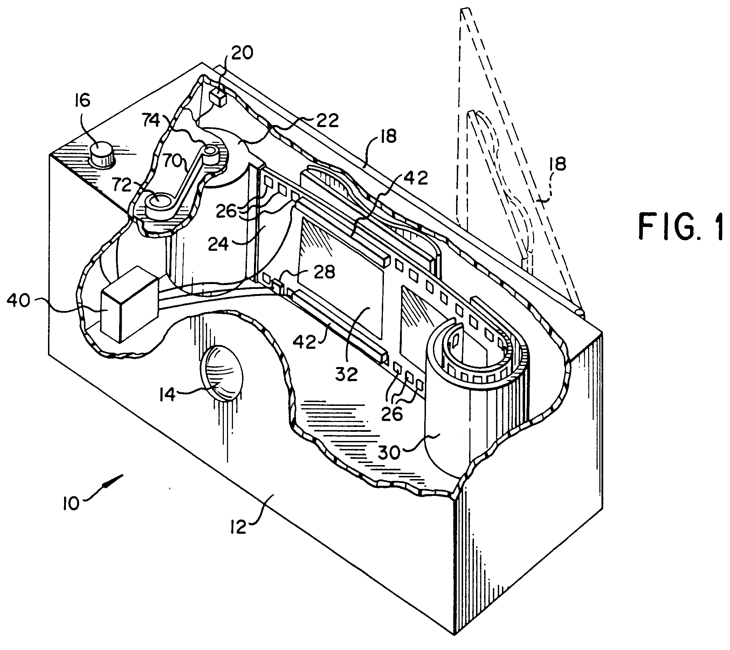

Fig. 1 shows an arrangement of the camera in which the present invention may be utilized. The camera 10 includes a housing 12, a lens 14, a shutter (not shown), and a shutter release button 16. The camera 10 further includes a rear door 18, pivotally mounted onto a rear side of the housing 12. The door 18 is shown in an open position by the dashed lines. A rear door sensing means 20 senses the position of the door 18 (i.e., opened or closed). The sensing means 20 can comprise a mechanical switch, for example.

The camera 10 further includes a film cartridge chamber (not shown) for receiving a film cartridge 22. The film cartridge 22 contains a supply of photographic film 24, the film containing perforations 26 and shown partially withdrawn from the cartridge 22. A film movement sensing means 28, comprising a switch for example, senses the perforations 26 for detecting film movement. A film take-up chamber 30, comprising a frictionless sleeve (such as, a sleeve with guide rollers), provides temporary storage for the film 24 when the same is advanced out of the cartridge 22. An exposure frame 32 is exposed with scene light passing through the lens 14 upon actuation of the shutter via the shutter release button 16.

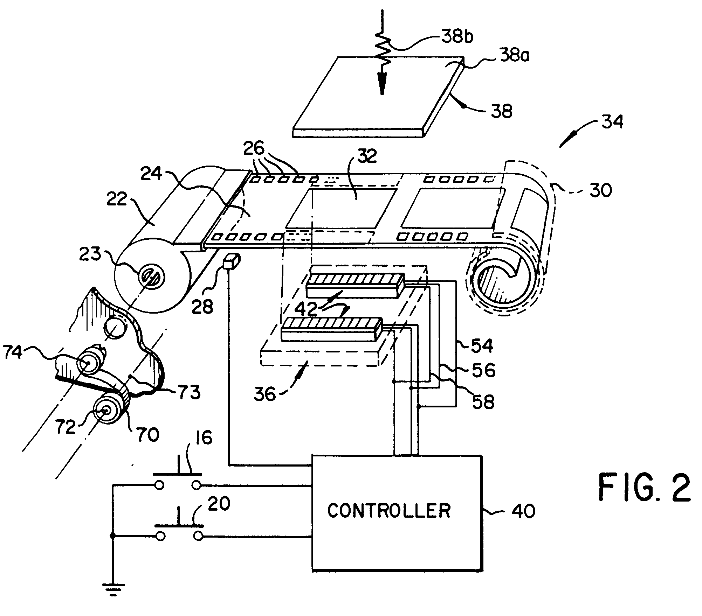

Referring now to Fig. 2, a film driving system 34 of the present invention comprises traveling wave generating means 36, engaging means 38, and control means 40. The traveling wave generating means 36 preferably comprises at least two linear ultrasonic motor stators 42. In general, a linear ultrasonic motor is mainly composed of a stator and a rotor, wherein, the stator comprises an elastic body and piezoelectric ceramics. Since linear ultrasonic motors are known, fabrication of the stators thereof is only briefly discussed herein.

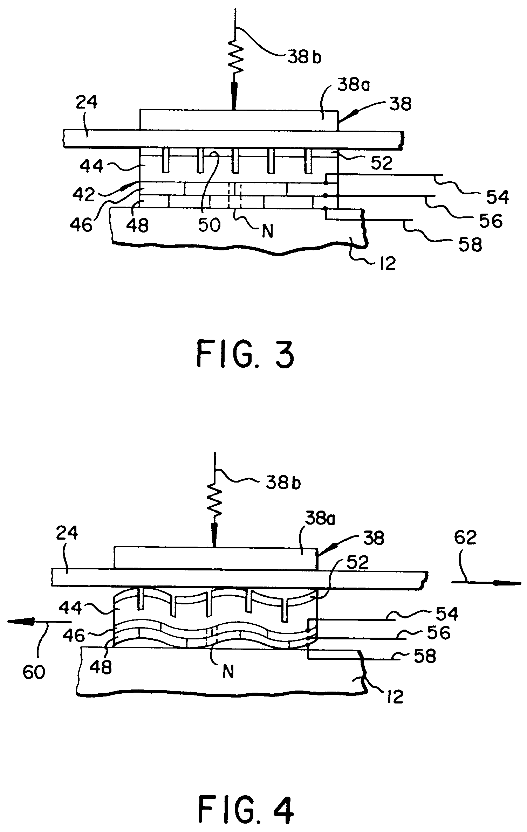

The following discussion is applicable to both stators 42 of the traveling wave generating means 36. As shown in Fig. 3, the stator 42 of the traveling wave generating means 36 comprises an elastic body 44 made of stainless steel or the like, adhered to two piezoelectric ceramic sheets 46 and 48. The piezoelectric ceramic sheets 46 and 48 comprise, for example, lead oxide, lead titanate, or lead zirconate and are formed into flat bar shapes, divided into electrodes, and then polarized. The ceramic sheets are adhered together, deviating in phase by 1/4 wavelength so as to generate traveling waves on the elastic body 44 when excited with alternating current voltages. The stator 42 of the wave generating means 36 is attached to a portion of the camera housing 12 by any suitable attachment means, preferably at a node N where traveling wave vibration is zero.

The elastic body 44 is grooved along a traveling wave surface comprising a top elongated side 50 and is covered with a lining material 52. The lining material 52 is adhered to the elastic body 44 for converting the traveling wave generating means stator oscillation into a linear moving force. While a lining material 52 has been shown, the traveling wave surface can equally comprise the top elongated side 50 having a roughened surface for providing a gripping action.

Referring again to Figs. 1, 2, and 3, the engaging means 38 comprises, for example, a film plate 38a and spring 38b. When the rear door 18 of the camera 10 is in the closed position, the engaging means 38 engages the film 24 with the traveling wave generating means 36. The traveling wave generating means 36 makes contact with the film 24 outside of the exposure frame area, preferably in the area of the film perforations 26. The spring 38b provides pressure which can be fixed or adjustable, as required for the engaging means 38 of a particular driving system.

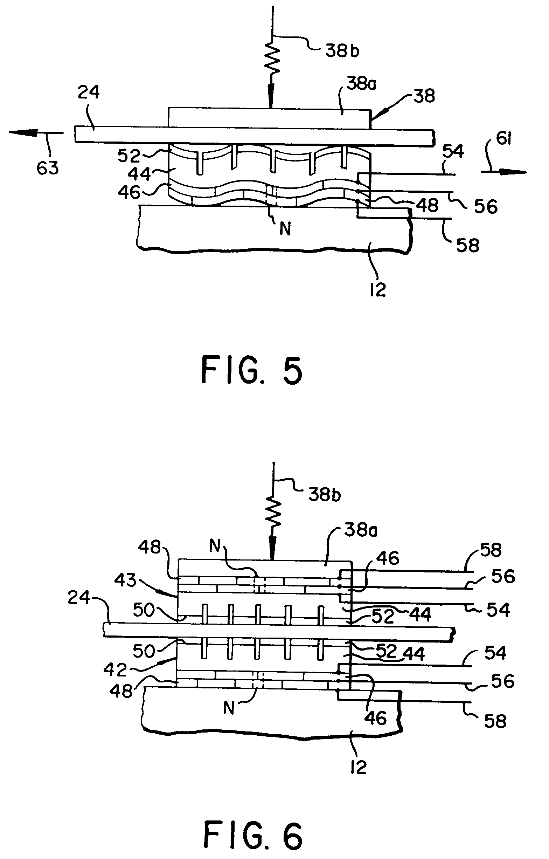

With reference to Fig. 2, the control means 40 can comprise, for example, a microcontroller or a microprocessor. As programming of a microcontroller or a microprocessor are known in the art, a discussion thereof is not included herein. The control means 40 receives signal inputs from the shutter release 16, the rear door sensing means 20, and the film movement sensing means 28. The control means 40 is also connected to the traveling wave generating means 36 via signal lines 54, 56, and 58, for providing signals to control the generation of traveling waves. Alternating-current voltages or excitation signals deviated in phase by 90 degrees from each other in time are provided on signal lines 54, 56, and 58, where line 56 is a common line. The alternating-current voltages applied to the signal lines 54 and 58 can comprise (-sin ωt) and (+cos ωt), respectively, for generating a traveling wave in a first direction indicated by the arrow 60 (FIG. 4). Likewise, the polarity of the excitation signals may be changed for generating traveling waves in the opposite direction, indicated by the arrow 61 (FIG. 5).

The film driving system 34 further comprises a means 70, coupleable to the film cartridge 22, for assisting movement of the film 24 back into the cartridge 22. Assistance with movement of film 24 back into the cartridge 22 is desirable because, with standard commercially available film cartridges, film cannot easily be pushed back into the cartridge without seizing up against the inner wall of the cartridge. Seizing up of the film prevents further pushing of the film back into the cartridge.

The means for assisting movement 70 can comprise, for example, a NEG'ATOR spring, manufactured by AMETEK of Sellersville, Pennsylvania. A first end 72 of the means 70 is attached to the camera housing 12 at a point indicated by 73 (Fig. 2). The opposite end 74 of the means 70 is coupled to the film spool 23 of the film cartridge 22 when the cartridge 22 is loaded into the camera 10. The means 70 comprises spring mass and provides a predetermined amount of rotational torque, the predetermined amount of torque being determined by the requirements of a particular camera drive system.

In operation, the rear door 18 of the camera 10 is opened to allow insertion of the film cartridge 22. The leader portion of film 24 is overlaid the traveling wave generating means 36. As the rear door 18 is closed, the engaging means 38 engages the film 24 with the traveling wave generating means 36. Upon detection of the closure of the rear door 18 via sensing means 20, the controller 40 sends signals to the traveling wave generating means to advance the film 24 to a first exposure frame. The signals (-sin ωt) and (+cos ωt) are sent via lines 54 and 58 for producing vibrations of the elastic body 44, the vibrations becoming traveling waves advancing with the passing of time and traveling in the direction indicated by the arrow 60 (FIG. 4). As a result of the traveling waves, the film 24 is moved in a film advance direction (or forward direction) indicated by the arrow 62. Film movement is accomplished without the use of a DC motor, gears, and gear trains. In addition, the amplitude and frequency of the vibrations are predetermined such that the length of travel of the film 24 by the means 36 is a function of time. Therefore, the control means 40 can control the distance of film travel via controlling the amount of time the excitation signals are applied on signal lines 54 and 58. Alternatively, the controller 40 could monitor film movement via the sensing means 28 and control the application of the excitation signals based upon detected film movement.

In a photographic exposure sequence, the shutter release button 16 is activated to open the shutter, allowing light to pass through the lens 14 and impinge upon the area of film exposure frame 32 of the film 24. The control means 40 senses actuation of the shutter release button 16, and upon completion of an exposure, the control means 40 activates the traveling wave generating means 36 to move film 24 in the film advance direction. Excitation signals are applied to signal lines 54 and 58 for a predetermined time for moving film 24 one exposure frame. In this manner, film 24 is pulled out of the film cartridge 22 to move the same in the film advance direction 62. Advanced film is stored in the film take-up chamber 30. In the absence of a DC motor, gears, and gear trains (numerous parts), minimal film movement operational noise is produced. The drive system reliability is also increased.

Film advancement continues with each subsequent exposure until no further film movement is detected. The control means 40 monitors film movement via the film movement sensor 28. Upon detection of no further film movement, the control means 40 applies excitation signals (sin ωt) and (-cos ωt) to signal lines 54 and 58, respectively, for producing vibrations of the elastic body 44, the vibrations becoming traveling waves traveling in the direction of arrow 61 (FIG. 5). As a result, film 24 is moved in a film rewind direction (or reverse direction), as indicated by arrow 63. In other words, film 24 is pushed back into the cartridge 22.

The distance of film movement in the reverse direction is controlled similarly as with movement in the forward direction (i.e., via time duration of the excitation signals applied to the traveling wave generating means 36 or via monitoring of film movement). In the preferred embodiment, the control means 40 controls traveling wave generating means 36 to move the film 24 in the reverse direction until the film 24 is substantially completely rewound into the film cartridge 22. Alternatively, the control means 40 can control the traveling wave generating means 36 to rewind the film 24 some other predetermined amount. In the absence of a DC motor, gears, and gear trains, minimal operational noise occurs during rewind with the present invention as compared with traditional film drive systems.

With respect to the film movement assisting means 70, reverse torque assisting energy is stored in the means 70 upon movement of film 24 in the film advance direction 62. That is, as film 24 is moved in the film advance direction 62, spring mass is transferred from the first end 72 to the second end 74 of the assisting means 70. As a result, reverse torque assisting energy is stored. Upon movement of film 24 in the rewind direction 63 back into the cartridge 22, the assisting means 70 releases the stored reverse torque assisting energy in that spring mass is transferred back from the second end 74 to the first end 72 of the means 70. The released reverse torque assisting energy prevents film 24 from seizing up along the inner wall of the film cartridge 22. That is, the means 70 provides sufficient torque to assist maintaining continuous film winding around the film spool 23 as film 24 is pushed into the cartridge 22. It should also be noted that the reverse torque assisting energy is insufficient to overcome the holding capability of the traveling wave generating means 36 and the engaging means 38 when film 24 is not being driven. The film winding system 34 is thus reliable.

In an alternate embodiment, the film driving system 34 is similar to the preferred embodiment with the following differences. The traveling wave generating means 36 further comprises two additional stators 43 of linear ultrasonic motors (Fig. 6). The stators 43 are located similarly as in the preferred embodiment but mounted upon the engaging the means 38. Traveling wave surfaces 51 of the stators 43 engage the film 24 in locations overlying the stators 42 of the traveling wave generating means 36 on the opposite side of the film 24. The controller 40 connects to the stators 43 via excitation signal lines 54, 56, and 58.

The alternate embodiment operates similarly as with the preferred embodiment. Stators 42 and 43 of the traveling wave generating means 36 are excited via excitation signals for producing traveling waves. The traveling waves move film 24 in a desired direction a predetermined amount. The stators 42 and 43, contacting top and bottom sides of the film 24, provide additional moving force for moving film 24 in the forward or the reverse directions.

Accordingly, it has been shown that a film drive system can be provided without the use of DC motors, gears, and gear trains. Furthermore, it has been shown that a film drive system can be provided that is simple and requires few parts.

While the invention has been described with reference to the preferred and alternate embodiments, it will be appreciated that variations and modifications can be effected within the scope of the invention. For example, the invention is applicable to film not contained in a film cassette or cartridge. Likewise, the invention is not limited to use with film having perforations; however, it is also applicable to film having spaced indications on the outer border edges of the film, such as, bar code frame numbers.

## Claims

1. A photographic film driving system in a camera (10) or the like, comprising:
means (36) for generating traveling waves, said traveling wave generating means having a traveling wave surface;
means (38) for engaging a photographic film (24) with the traveling wave surface; and
means (40) for controlling said traveling wave generating means to generate a traveling wave for moving the film in a film advance direction or a film rewind direction.

2. In a camera (10) adapted to receive a film cartridge (22), the film cartridge being preloaded with a photographic film (24) wound around a film spool (23), a photographic film driving system, comprising:
means (36) for generating traveling waves, said traveling wave generating means having a traveling wave surface;
means (38) for engaging the photographic film with the traveling wave surface, the film being moved in response to traveling waves generated by said traveling wave generating means; and
means (40) for controlling said traveling wave generating means to move the film in a forward or a reverse direction, the forward direction being in a film advance direction out of the film cartridge, and the reverse direction being in a film rewind direction back into the film cartridge.

3. The film driving system of Claim 2 wherein the traveling wave generating means comprises at least one pair of linear ultrasonic motor stators (42).

4. The film driving system of Claim 2 wherein said control means controls said traveling wave generating means to move the film in the forward direction by a predetermined amount.

5. The film driving system of Claim 2 wherein said control means controls said traveling wave generating means to move the film in the reverse direction until the film is substantially completely rewound into the film cartridge.

6. The film driving system of claim 2, further comprising means (70) coupleable to the film spool (23) of the film cartridge for preventing seizure of the film inside the film cartridge as the film is moved in the reverse direction into the film cartridge.

7. The film driving system of claim 6, wherein said seizure preventing means comprises a spring.

8. A photographic film transport system for a camera (10) comprising:
at least two linear piezoelectric ultrasonic motor stators (42);
a spring biased film plate (38a) for engaging a photographic film (24) with said motor; and
a controller (40) for generating a signal and causing said motor to produce traveling waves so as to move the film in a forward or reverse direction, depending upon the signal.

9. A film driving system comprising:
means (36) for generating and imparting traveling wave motion to a film (24) to move the film, the generating and imparting means producing traveling waves in either a forward or a reverse direction, corresponding to the film being moved in the opposite direction of the traveling waves; and
means (40) for controlling the traveling waves to move the film in a desired direction.

10. A method of driving film, comprising the steps of:
a) generating traveling waves in a forward or a reverse direction; and
b) imparting traveling wave motion onto the film (24) for moving the film in an opposite direction of the traveling waves.

11. A method of driving film in a camera, comprising the steps of:
a) applying traveling wave motion to a film (24) for moving the film in a forward or a reverse direction; and
b) controlling the traveling wave motion to move the film in a desired direction.

12. The method of claim 11, wherein the step of applying traveling wave motion comprises:
generating traveling waves in a reverse or a forward direction; and
applying a predetermined pressure between the traveling waves and the film (24) for moving the film in the opposite direction to the traveling waves.

13. The method of claim 11, wherein the step of controlling the traveling wave motion further comprises:
controlling the traveling wave motion to move the film (24) a predetermined amount in the desired direction.

14. A method of driving film in a camera comprising the steps of:
a) generating traveling waves in a forward or a reverse direction;
b) holding the traveling waves in pressure contact with a film (24) for imparting traveling wave motion to the film in a direction opposite to the traveling wave direction; and
c) controlling the traveling waves to move the film in a desired direction.
